# EUROPEAN PATENT APPLICATION

(11) **EP 4 831 035 A1**
(43) Date of publication of application: **28.10.2026**
(21) Application number: 25172287.2
(22) Date of filing: 24.04.2025
(51) Int. Cl.: B61L 27/12, B61L 27/16

(54) **METHOD AND SYSTEM FOR OPTIMIZING OPERATING PLAN FOR TRAINS**

(71) Applicant: Hitachi, Ltd., Tokyo 100-8280 (JP)
(72) Inventor: YONEHARA, Miki, Tokyo, 100-8280 (JP); ADACHI, Shingo, London, EC2Y 5AJ (GB); IMAMOTO, Kenji, London, EC2Y 5AJ (GB); BROADBENT, Andrew, London, EC2Y 5AJ (GB)
(74) Representative: Mewburn Ellis LLP

(57) **Abstract**

A computer-implemented method of managing power consumption in a railway network. The method comprises steps of: (a) obtaining an operating plan for the railway network, the operating plan describing the operation of two or more trains operating in one or more sections of the railway network; (b) for the, or each, section of the railway network, calculating, using the operating plan, a predicted energy consumption for the section over time; (c) identifying one or more sections that are supplied with overhead power via one or more electrical substations and where the corresponding predicted energy consumption within a time period exceeds a threshold value; and (d) for the or each identified sections, adjusting the operating plan for one or more of the trains to reduce the predicted energy consumption within the time period.

## Description

### TECHNICAL FIELD

The present disclosure relates to a computer-implemented method, a control system, a computer-readable storage medium, and a railway network

### BACKGROUND

Convention drive systems for railway vehicles include hybrid systems in which the primary power can be selectively drawn from an overhead line or a generator powered by a diesel engine. In such drive systems, on-board energy storage systems, such as lithium ion batteries, or lead batteries, connecting to the energy storage system between the primary power source and the traction transmission system driving the wheels. Surplus energy from the primary power source, or energy from regenerative braking, can be stored in the energy storage system.

Less common are railway vehicles which carry traction batteries, where the batteries are the primary power supply for the motors in the railway vehicles. Such trains can be used for 'gap-filling' operations, in which the trains are used in both electrified and non-electrified track sections, allowing their batteries to be recharged by overhead pickup when the trains are travelling in the electrified sections. However, with improvements in energy storage capability enabling longer distances to be travelled on non-electrified track sections, there are growing possibilities for using on-board energy storage systems as the primary power source for traction.

The present disclosure was arrived at in light of the above considerations.

### SUMMARY

Accordingly, in a first aspect, embodiments of the invention provide a computer-implemented method of managing power consumption in a railway network, the method comprising steps of:
(a) obtaining an operating plan for the railway network, the operating plan describing the operation of two or more trains operating in one or more sections of the railway network;
(b) for the, or each, section of the railway network, calculating, using the operating plan, a predicted energy consumption for the section over time;
(c) identifying one or more sections that are supplied with overhead power via one or more electrical substations and where the corresponding predicted energy consumption within a time period exceeds a threshold value; and
(d) for the or each identified section, adjusting the operating plan for one or more of the trains to reduce the predicted energy consumption within the time period.

Such a method can minimise the peak energy consumption of the railway network within a given time period, which stabilises the grid providing power to the railway network.

A section may be defined as a region of the railway network which is electrified or non-electrified. The electrified sections may be further demarked by sections which are powered by one electrical substation. A period of time may correspond to 1 second, 30 seconds, one minute, five minutes, ten minutes, fifteen minutes, thirty minutes, or one hour. The threshold value may be fixed, or may be adjusted in time. It may be at least 1 MW, at least 10 MW, or at least 100 MW.

The operating plan may comprise two plans, a running plan (indicating where a particular train is scheduled to be at a particular time and what speed they are scheduled to be doing) and a charging plan (indicating whether the on-board energy storage systems should be charging or discharging) or may consist of only one of these two plans. The running plan may be referred to as or may include an acceleration profile, indicating the expected acceleration of the train over time. The charging plan may be referred to as a battery utilisation or battery charging plan, indicating the charging rate or utilisation rate of the battery of the train over time.

Adjusting the operating plan to reduce the predicted energy consumption within the time period may include one or more of:
(i) changing a battery utilisation profile of one or more trains so as to charge the battery of the given train(s) in a section preceding the identified section;
(ii) changing an acceleration profile of one or more trains so as to accelerate in a section preceding or a section following, the identified section
(iii) changing the acceleration profile of one or more trains so as to accelerate at a time overlapping with a time at which another train in the same section is decelerating;
(iv) changing a charging time in the battery utilisation profile of one or more trains to separate them when they previously overlapped in time; and
(v) changing the acceleration profile of one or more trains to separate them when they previously overlapped in time.

One or more of the sections of the railway network may be supplied with overhead power via one or more electrical substations; and wherein one or more of the sections of the railway network are not supplied with overhead power, such that the trains operating therein operate using on-board batteries and/or on-board diesel generators.

The method may include, in step (d), a step of identifying one or more trains from a plurality of trains to adjust the operating plan of. Identifying the one or more trains may be performed on the basis of a health value of the battery of each train.

The method may further include generating an optimal charging plan for the or each train. The optimal charging plan may ensure that for any unelectrified sections of the railway network a train is passing through, the state of charge of the battery of the given train is sufficient for the train to pass entirely through said unelectrified section. This can be achieved, for example, by ensuring the battery charges to an appropriate state of charge before the train enters the unelectrified section, or by allowing the train to use an on-board diesel generator to provide power to the motors and/or charge the battery. The optimal charging plan may, moreover, minimise the charging rate of the battery(s) in any electrified sections.

In step (b), historical operating plans may be used when calculating the predicted energy consumption. In step (b), historical driver behaviour (also referred to as driving tendency and variation) may be used when calculating the predicted energy consumption.

The operating plan may further comprise an indication of a source of power a given train is to use within a particular section of the railway network.

The or each train may be operated according to the adjusted operating plan.

In a second aspect, embodiments of the invention provide a control system for managing power consumption in a railway network, the control system comprising:
an operating plan database, storing an operating plan describing the operation of two or more trains operating in one or more sections of the railway network;
an energy consumption prediction module, configured to calculate for the or each section of the railway network, using the operation plan stored in the operating plan database, a predicted energy consumption for the section over time;
an energy consumption optimization module, configured:
   to identify one or more sections that are supplied with overhead power via one or more electrical substations and where the corresponding predicted energy consumption within a time period exceeds a threshold value; and
   for the identified sections, adjust the operating plan for one or more of the trains to reduce the predicted energy consumption within the time period.

The control system of the second aspect may include any one, or any combination insofar as they are compatible, of the optional features set out with reference to the first aspect.

The energy consumption optimization module may be configured to adjust the operating plan to reduce the predicted energy consumption within the time period by:
(i) changing a battery utilisation profile of one or more trains so as to charge the battery of the given train(s) in a section preceding the identified section;
(ii) changing an acceleration profile of one or more trains so as to accelerate in a section preceding or a section following, the identified section;
(iii) changing the acceleration profile of one or more trains so as to accelerate at a time overlapping with when another train in the same section is decelerating;
(iv) changing a charging time in the battery utilisation profile of one or more trains to separate them when they previously overlapped in time; and
(v) changing the acceleration profile of one or more trains to separate them when they previously overlapped in time.

The energy consumption optimization module may, when adjusting the operating plan, identify one or more trains from a plurality of trains to adjust the operating plan of. The energy consumption optimization module may be connected to a battery health database, which stores values indicating the health of the one or more batteries on the one or more trains, and the energy consumption optimization module may identify a train to have the operating plan thereof changed on the basis of a health value of the battery of the given train.

The control system may further comprise a battery charging optimization module, configured to generate an optimal charging plan for the or each train. The optimal charging plan may be generated to ensure that for any unelectrified sections of the railway network a train is planned to pass through, the state of charge of the battery of the given train is sufficient for the train to pass entirely through said unelectrified section. The optimal charging plan may, moreover, minimise the charging rate of the batter(ies) in any electrified sections.

The energy consumption prediction module may further be configured to obtain historical operating plans and use these in calculating the predicted energy consumption. For example, the energy consumption prediction module may be connected or connectable to one or more databases containing historical operating plans (for example, as stored on each of the plurality of trains, or centrally, or on a cloud system).

The energy consumption prediction module may be further configured to obtain historical driver behaviour and use this in calculating the predicted energy consumption. For example, the control system may include a driving tendency and variation database to which the energy consumption prediction module is connected.

The operating plans stored in the operating plan database may indicate a source of power a given train is to use within a particular section of the railway network.

In a third aspect, embodiments of the invention provide a computer-readable storage medium containing machine executable instructions which, when executed on a processor, cause the processor to perform the method of the first aspect including any one or any combination of the optional features set out with reference thereto.

In a fourth aspect, embodiments of the invention provide a railway network comprising a plurality of autonomous trains in a plurality of sections of the railway network, wherein the plurality of trains are configured to operate according to the adjusted operating plan of the first aspect.

The invention includes the combination of the aspects and preferred features described except where such a combination is clearly impermissible or expressly avoided.

Further aspects of the present invention provide: a computer program comprising code which, when run on a computer, causes the computer to perform the method of the first aspect; a computer readable medium storing a computer program comprising code which, when run on a computer, causes the computer to perform the method of the first aspect; and a computer system programmed to perform the method of the first aspect.

### BRIEF DESCRIPTION OF THE DRAWINGS

Fig. 1 is a system diagram;
Fig. 2 is a schematic of a railway;
Fig. 3 is a plot of running speed against time for a given train;
Fig. 4 is a plot of battery state of charge against time;
Fig. 5 is a plot of consumption in a substation against time prior to the adjustment of the running plan;
Fig. 6 is a plot of consumption in the substation of Fig. 5 against time after adjustment of the running plan;
Fig. 7 is a flow chart;
Fig. 8 is a flow chart;
Fig. 9 is a flow chart;
Fig. 10 is a table showing a running plan;
Fig. 11 is a table showing a charging plan;
Fig. 12 is a table and plot showing energy consumption in a substation prior to adjustment of the running plan;
Fig. 13 is a table and plot showing energy consumption in the substation after adjustment of the running plan;
Fig. 14 is a table showing battery health;
Fig. 15 is a table showing the number of times a train's timetable has been adjusted;
Fig. 16 is a table showing a priority value for each train;
Fig. 17 is a table showing historical driver behaviour;
Fig. 18 is a table showing an adjusted running plan; and
Fig. 19 is a table showing an adjusted charging plan.

### DETAILED DESCRIPTION

Aspects and embodiments of the present invention will now be discussed with reference to the accompanying figures. Further aspects and embodiments will be apparent to those skilled in the art.

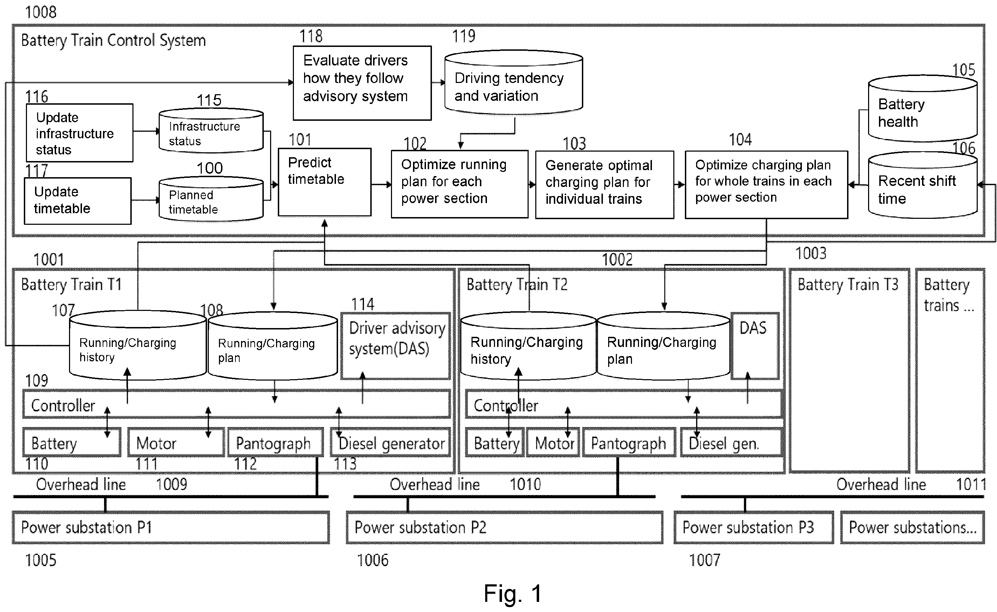

Fig. 1 is a system diagram showing the components of a railway network. It includes a battery train control system 1008, also referred to as a control system, which is connected to a plurality of trains 1001, 1002, 1003, etc. Each of the trains is connected or connectable to overhead lines 1009, 1010, 1011 etc, and these overhead lines are powered by power substations 1005, 1006, 1007 etc.

The battery train control system includes a plurality of modules. These include a predict timetable module 101, also referred to as an energy consumption prediction module. It is connected to a planned timetable database 100 (also referred to as an operating plan database). The planned timetable database describes the operation of one or more trains operating in one or more sections of the railway network. The predict timetable module 101 is also connected to an infrastructure status database 115, which describes the availability of and constraints on various infrastructure components of the railway network. For example, it may hold data indicating the scheduled maintenance of a given substation (and therefore that power may be unavailable from it for a given period). It may also store values indicating the maximum drawable power from the substations. The infrastructure status database 115 is connected to an update infrastructure status module 116, which is configured to receive or derive changes to the infrastructure status and provide those into the infrastructure status database 115. Similarly, the planned timetable database 100 is connected to an update timetable module 116, which is configured to receive or derive changes to the timetable and provide those into the planned time table database 100.

The battery train control system 1008 also includes an optimize running plan for each power section module 102, also referred to as, as forming a part of, an energy consumption optimization module. It receives the predicted timetable from the predict timetable module 101, and also in this example is connected to a driving tendency and variation database 119. This database is connected to a driver evaluation module 118 which evaluates how drivers follow their advisory systems, and so how closely they can be expected to follow the running / operating plan. The operation of the energy consumption optimization module is discussed in more detail below.

The battery train control system 1008 also includes an individual optimal charging plan module 103 which, for each individual train, generates an optimal charging plan for the batteries thereof. For example, it may ensure that the states of charge for the batteries are sufficient for each non-electrified section of the railway network and/or ensure that the batteries charge at the slowest appropriate rate (to maintain battery health). The optimal charging plan module 103 is connected to the energy consumption prediction module 102 and utilises the adjusted operating plan derived thereby.

The optimal charging plan module 103 is connected to a network wide optimal charging plan module 104, which optimizes the charging plans of all of the trains in each section of the railway. It receives the optimal charging plan from the module 103, and ensures, for example, that the power consumption in a given time period does not exceed a threshold value. The network wide optimal charging plan module 104 may be referred to, or may form a part of, the energy consumption optimization module.

The battery train control system 1008 also includes a battery health database 105 and a recent shift time database 105. The battery health database includes values indicating the health of the batteries within the trains, and the recent shift time database includes values indicating when a train has previously had its operating plan adjusted in order to avoid the total power usage exceeding the threshold. For example, it may note when a train has had its battery charged earlier or faster than preferred, so as to meet the overall requirement of a lower peak energy usage. Whilst shown as being connected to the module 104, it can also be connected to module 102.

Each of the trains shown in Figure 1 is connected to the battery train control system 1008, for example via the internet or other wide area network connection. The trains in this example include the following components: a running / charging history database 107, which stores data indicating previous running plans and charging plans; running / charging plan database 108, which stores the current operating plan; a controller 109, which may be a processor other unit, and controls the batteries and motor; batter(ies) 110, to which the controller is connected; motor 111, usable to drive the train and also connected to the controller and sources of power; pantograph 112, which can draw power from overhead lines; and a diesel generator 113, which can be used to provide power to the motors and batteries. In some examples, the trains may not include the diesel generators 113. The batter(ies) can be used to provide energy to the motor when the train is in an unelectrified section, or that can also be used as an additional traction power supply for the motor when the train is in an electrified section for better running performance. The trains also include a driver advisory system 114, which provides advisory information (e.g., information relating to the operating plan) to the driver. Where the train is a driverless train, the DAS may be omitted. As shown, the trains are connected to the battery train control system 1008 so as to receive the optimized operating plan therefrom.

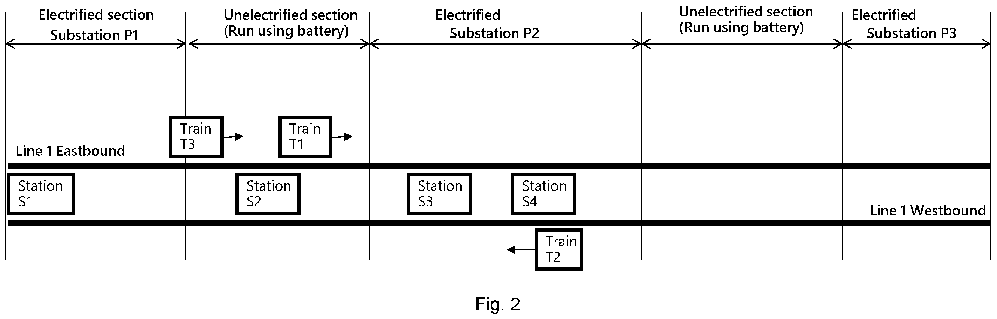

Fig. 2 is a schematic of an example railway network. The network includes a line with westbound and eastbound direction and trains T1 to T3 running on the line. The line has multiple power sections. Some of them are electrified and so power is supplied to these sections via respective substations. Other sections are unelectrified. Power can be supplied to the trains from the substations in electrified sections for acceleration by the motor and charging the battery on the train. In unelectrified sections, power is supplied to the motor from the battery.

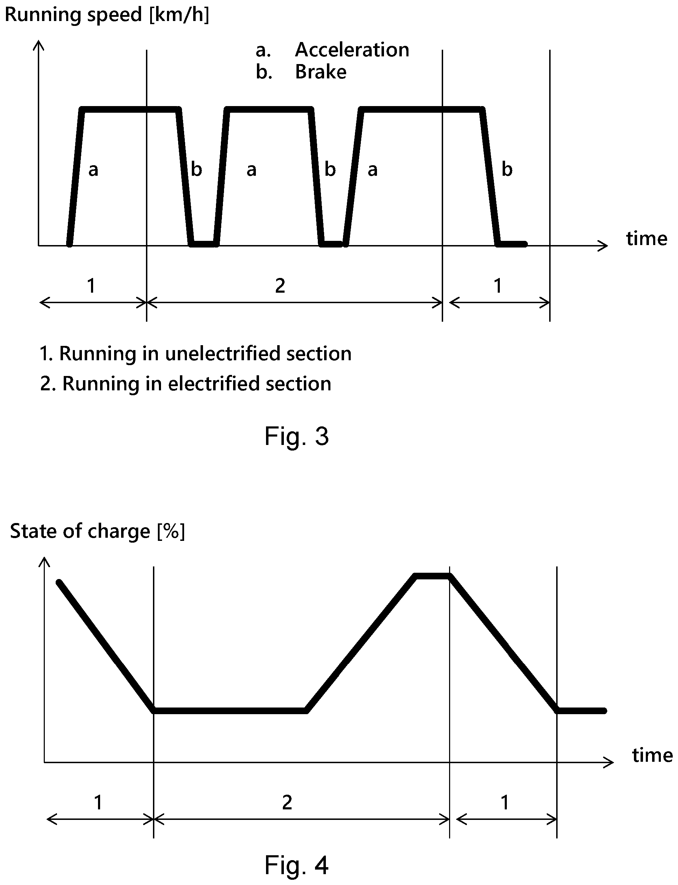

Fig. 3 is a plot of running speed against time for a given train. Fig. 4 is a plot of battery state of charge against time. Together, these represent an operating plan for a given train by defining the running and charging. The running plan describes the time and running speeds. In some periods the train accelerates and in other periods the train brakes. The charging plan describes the time and state of charge of the battery. In some periods, when a train is running in an unelectrified section, the battery will discharge and be used for accelerating the train. In other periods, when a train is running in an electrified section, the battery may be charged. In order for the train to safely run through an unelectrified section of the railway network, the battery must be charged to a specific state. So as to maximise the lifetime of the battery, however, the charge timing and charging speed should be considered and the charging speed kept as low as possible. In some electrified sections, there may not be enough electric power to charge the battery on the trains because the supply is also being used to provide power to the motors. For this reason, at the beginning of an electrified section, the battery may not be charged and is only charged later on.

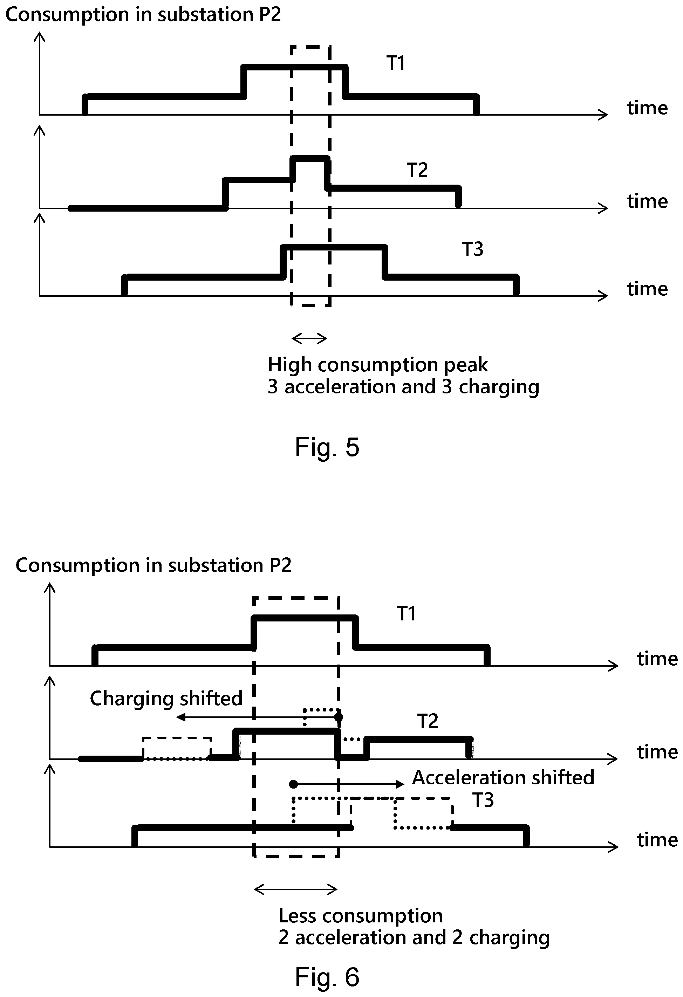

Fig. 5 is a plot of consumption in a substation against time prior to the adjustment of the running plan. Specifically it shows the energy consumption at substation P2, where according to the operating plan trains T1 - T3 will run through at the same time. Each chart shows the energy consumption by the train (in arbitrary units). For example, in the upper chart, train T1 consumes energy for charging and then for acceleration is added for a while, and then it only consumes power for charging. Before optimization has taken place, there is a period when all three trains are both accelerating and charging which results in a high consumption peak. After optimization takes place, as shown in Fig. 6, train T2 is shifted so that it charges earlier and train T3 is shifted so that it accelerates later. Thus the peak power consumption is reduced.

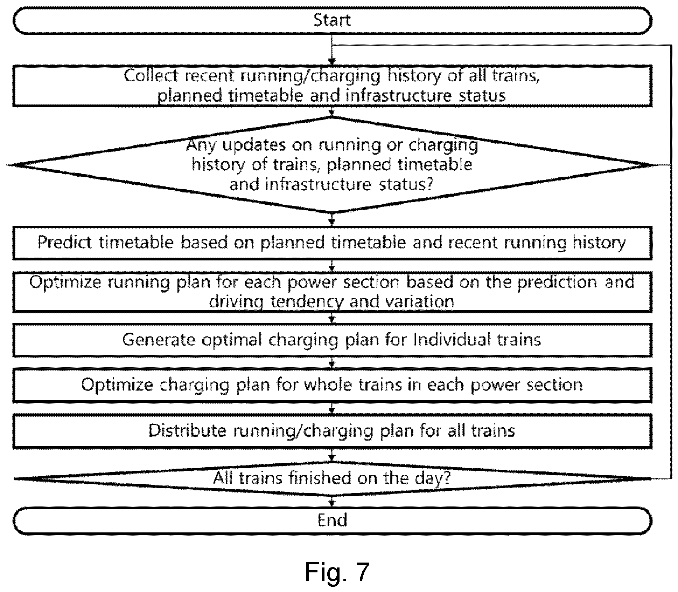

Fig. 7 is a flow chart showing the overall process performed by the battery train control system. First, recent running/charging histories are collected from all trains, and also the planned timetable and infrastructure status are obtained. If there are any updates on the running or charging history, planned timetable, and infrastructure status, the control system then predicts the timetable based on the planned timetable and recent running history. Simultaneous acceleration occurring within a same substation section is detected, and the running plan is optimized for each section, by shifting the acceleration timing. When calculating the acceleration timing, driving tendency and variation is also considered to reflect that some drivers follow the advisory information from their DAS better than others. After this, an optimal charging plan for individual trains is generated based on the running plan optimized in the previous step. During this charging plan generation step, driving tendency and variation is considered again so as to add marginal energy consumption for those drivers who accelerate harshly. In addition, the infrastructure status is considered so that the charging requirements before running into an unelectrified section are met even if some part of the infrastructure had a fault (e.g., dewirement). In such a situation, the charging would start earlier than originally planned to compensate.

The plans from all of the trains may include simultaneous charging and acceleration in the same section of the railway network, and so in the next step the control system optimizing the charging plan for all of the train in a given power section, by shifting the charging timing. Finally, the plan(s) are distributed to all of the trains. For trains with drivers, the advisory information is indicated to the drivers via the DAS. For driverless trains, the trains are controlled automatically based on the plan(s). The steps above are executed until all trains have finished their routes for the day, and the method is repeated when any updates are obtained from trains or external input from the timetable and infrastructure database are received.

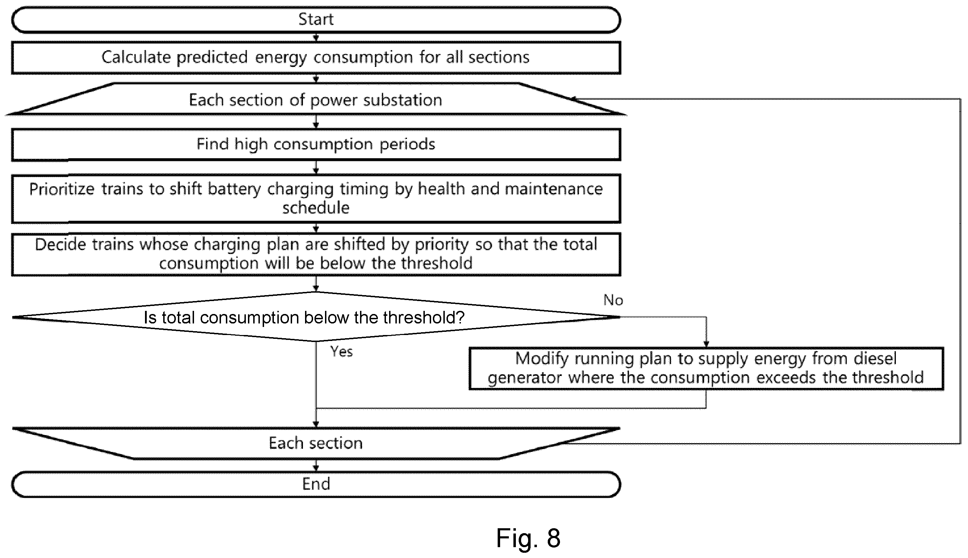

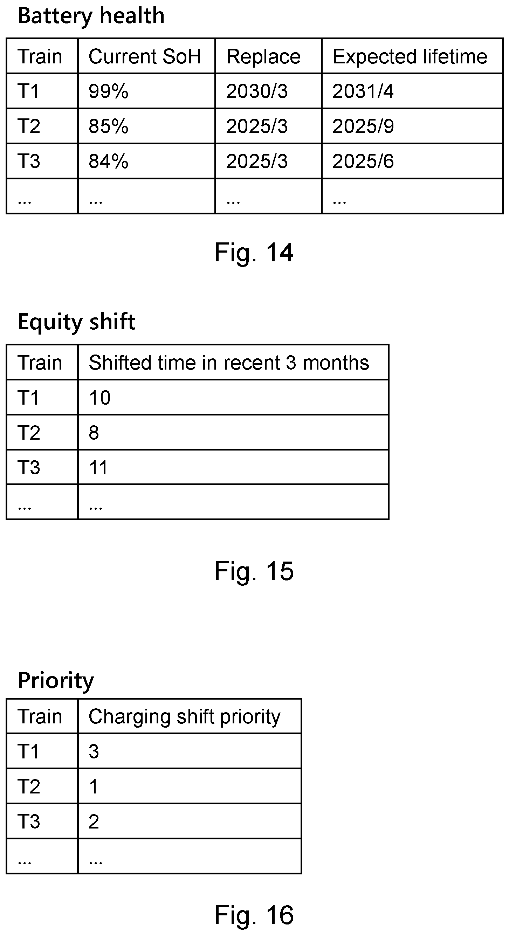

Fig. 8 is a flow chart showing the detailed process for optimizing the charging plan. Firstly, the predicted energy consumption for all sections of the railway network is calculated. For each section, high consumption periods are identified (e.g., by comparing to a threshold). To shift the peak in power consumption, a priority score for each train is calculated to decide which train's charging plan should be shifted to reduce the peak. The priority score is calculated using the battery health of each train. The principle used is to prioritize trains whose battery replacement time is near. If there are trains with the same replacement time, a second principle is to prioritize trains with longer expected lifetimes. The first principle is based on the concept that batteries that will be replaced in the near future can be deteriorated but new batteries should be kept as healthy as possible. The second principle is based on the idea that a scenario where a battery is deteriorated too early and the lifetime becomes shorter than the replacement time must be avoided, and so a battery with a longer lifetime but the same replacement time should be chosen to shift. The train(s) to be shifted are chosen so that the total consumption will be below the threshold. If there are periods where the total consumption still exceeds the threshold, after optimization has taken place, the running plan can be modified to use any on-board diesel generators. These steps are performed for all sections of the railway network. In some embodiments, a third principles may be used which is equity of shifting. If the conditions of the first and second principles discussed above are the same for some trains, a third principle would be to select the train with the highest number of shifts. For example, the table in Fig. 15, showing the times a given train has been shifted in a predetermined period (here, 3 months) can be utilised. The train with the highest number of shifts may be left alone, with the train (in the set of trains under consideration) with the lowest number of shifts being chosen to shift.

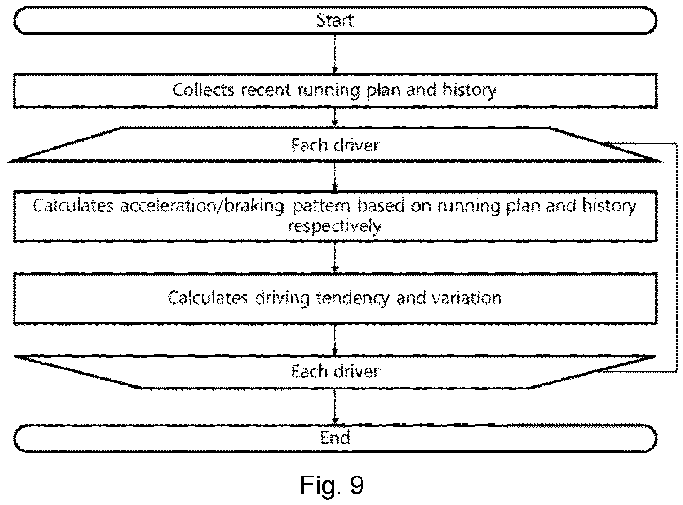

Fig. 9 is a flow chart showing the detailed process for driver evaluation. The process is executed occasionally, for example less frequently than once a day, to evaluate driving tendency and variation for each driver. The process collects recent running plans and running histories and then, for each driver, the acceleration and braking pattern for the running plan and history are calculated. Comparing the patterns from the driving plan and the history, the relative average and variance of energy consumption peak and timing can be calculated. This result is stored in the driver tendency and variation database.

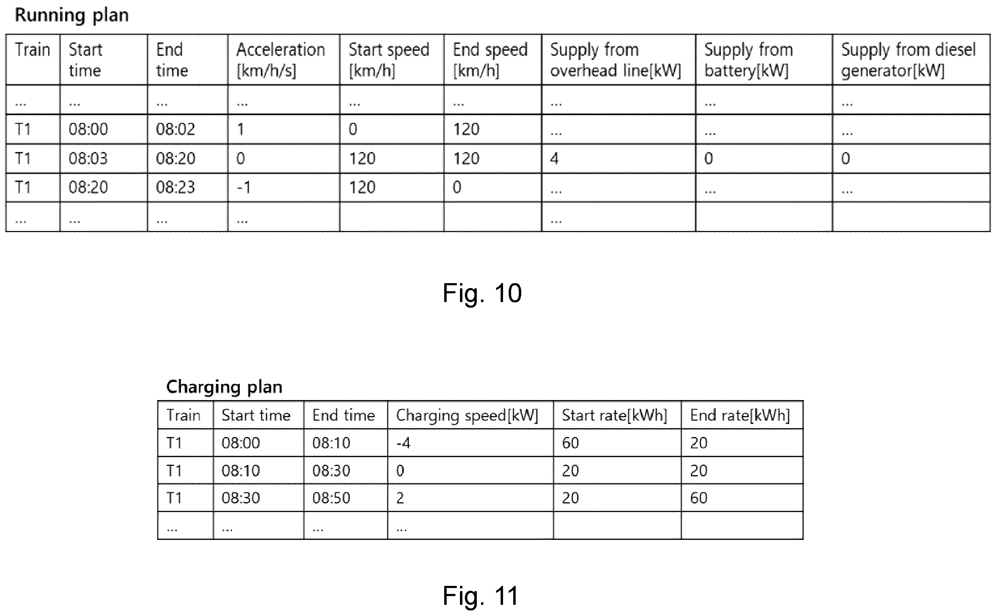

Fig. 10 is a table showing a running plan and Fig. 11 is a table showing a charging plan. The running plan includes acceleration and speed values at the beginning and end of periods of time, and the power supplement from each energy source such as overhead line, battery, and diesel generator. The charging plan includes charging speed and charging rate values at the beginning and end of the periods of time.

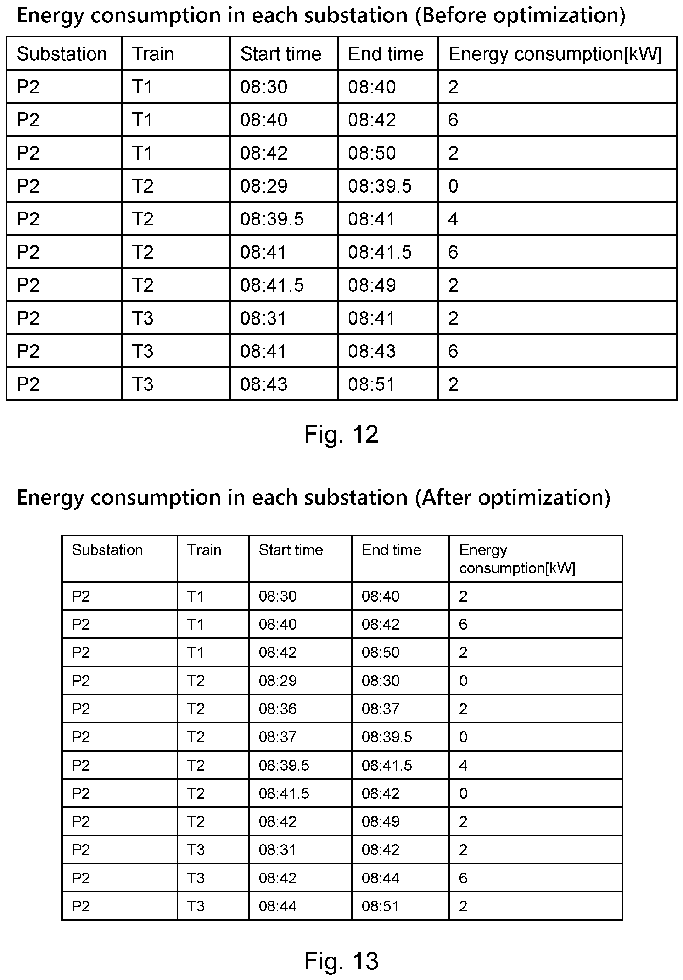

Fig. 12 is a table and plot showing energy consumption in a substation prior to adjustment of the operating plan. It shows the structure of energy consumption in a given substation (P2) by each train at a certain period of time. Fig. 13 is a table and plot showing energy consumption in the substation after adjustment of the running plan.

Fig. 14 is a table showing battery health, which is used for calculating the priority score for each train as discussed above. Fig. 15 is a table showing the number of times a train's timetable has been adjusted, which is also used for calculating the priority score for each train as discussed above. Fig. 16 is a table showing a priority value for each train. This can be used to decide which trains should be chosen to have their operating plan adjusted (e.g., their charging times shifted) in order to reduce the peak energy consumption in a given substation.

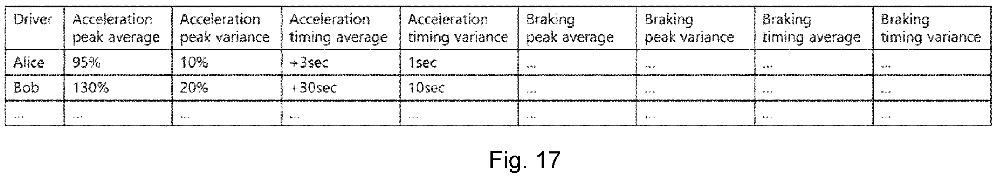

Fig. 17 is a table showing historical driver behaviour. This can be used to calculate marginal energy consumption or timing variation when optimizing the running plan. For example, the average and variance for acceleration peak and timing variation can be stored as compared to the optimized plan and driver advisory value.

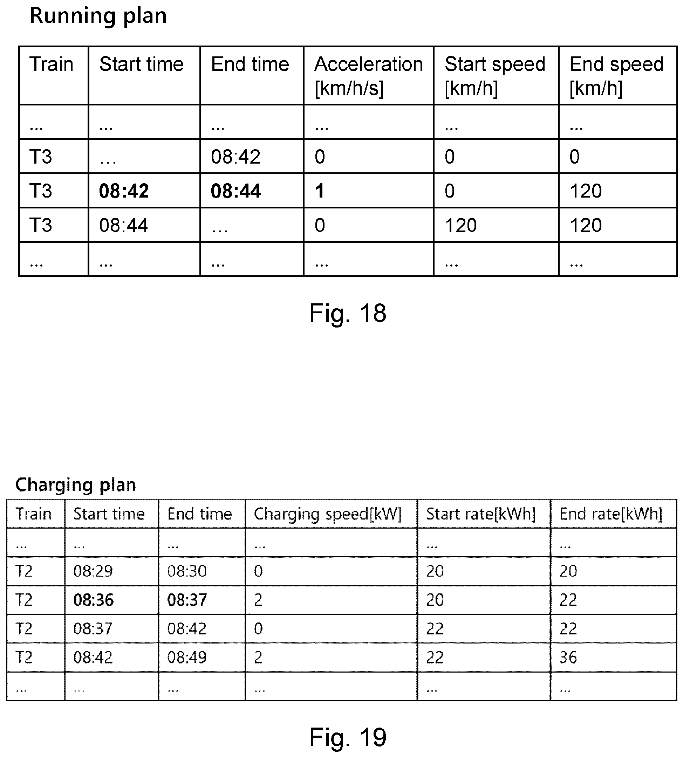

Fig. 18 is a table showing an adjusted running plan and Fig. 19 is a table showing an adjusted charging plan, together they represent an adjusted operating plan. The structure is the same as that shown in Figs. 10 and 11, but the acceleration and charging times as shown in bold are shifted.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. The computer system may have a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the spirit and scope of the disclosure.

In particular, although the methods of the above embodiments have been described as being implemented on the systems of the embodiments described, the methods and systems of the present disclosure need not be implemented in conjunction with each other, but can be implemented on alternative systems or using alternative methods respectively.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the disclosure in diverse forms thereof.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the spirit and scope of the disclosure.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method of managing power consumption in a railway network, the method comprising steps of:
(a) obtaining an operating plan for the railway network, the operating plan describing the operation of two or more trains operating in one or more sections of the railway network;
(b) for the, or each, section of the railway network, calculating, using the operating plan, a predicted energy consumption for the section over time;
(c) identifying one or more sections that are supplied with overhead power via one or more electrical substations and where the corresponding predicted energy consumption within a time period exceeds a threshold value; and
(d) for the or each identified sections, adjusting the operating plan for one or more of the trains to reduce the predicted energy consumption within the time period.

2. The computer-implemented method of claim 1, wherein adjusting the operating plan to reduce the predicted energy consumption within the time period includes one or more of:
(i) changing a battery utilisation profile of one or more trains so as to charge the battery of the given train(s) in a section preceding the identified section;
(ii) changing an acceleration profile of one or more trains so as to accelerate in a section preceding or a section following, the identified section;
(iii) changing the acceleration profile of one or more trains so as to accelerate at a time overlapping with when another train in the same section is decelerating;
(iv) changing a charging time in the battery utilisation profile of one or more trains to separate them when they previously overlapped in time; and
(v) changing the acceleration profile of one or more trains to separate them when they previously overlapped in time.

3. The computer-implemented method of claim 1 or claim 2, wherein one or more of the sections of the railway network are supplied with overhead power via one or more electrical substations; and wherein one or more of the sections of the railway network are not supplied with overhead power, such that the trains operating therein operate using on-board batteries.

4. The computer-implemented method of any of claims 1 - 3, including, in step (d), a step of identifying one or more trains from a plurality of trains to adjust the operating plan of.

5. The computer-implemented method of claim 4, wherein identifying the one or more trains is performed on the basis of a health value of the battery of each train.

6. The computer-implemented method of any preceding claim, the method further comprising generating an optimal charging plan for the or each train.

7. The computer-implemented method of claim 6, wherein the optimal charging plan ensures that for any unelectrified sections of the railway network a train is planned to pass through, the state of charge of the battery of the given train is sufficient for the train to pass entirely through said unelectrified sections.

8. The computer-implemented method of claim 7, wherein the optimal charging plan moreover minimises the charging rate of the battery(s) in any electrified sections.

9. The computer-implemented method of any preceding claim, wherein in step (b), historical operating plans are used when calculating the predicted energy consumption.

10. The computer-implemented method of any preceding claim, wherein in step (b), historical driver behaviour is used when calculating the predicted energy consumption.

11. The computer-implemented method of any preceding claim, wherein the operating plan further comprises an indication of a source of power a given train is to use within a particular region of the railway network.

12. The computer-implemented method of any preceding claim, wherein the or each train is operated according to the adjusted operating plan.

13. A control system for managing power consumption in a railway network, the control system comprising:
an operating plan database, storing an operating plan describing the operation of two or more trains operating in one or more sections of the railway network;
an energy consumption prediction module, configured to calculate for the or each section of the railway network, using the operation plan stored in the operating plan database, a predicted energy consumption for the section over time; and
an energy consumption optimization module, configured:
to identify one or more sections that are supplied with overhead power via one or more electrical substations and where the corresponding predicted energy consumption within a time period exceeds a threshold value; and
for the identified sections, adjust the operating plan for one or more of the trains to reduce the predicted energy consumption within the time period.

14. A computer-readable storage medium containing machine executable instructions which, when executed on a processor, cause the processor to perform the method of any of claims 1 - 12.

15. A railway network comprising a plurality of autonomous trains operating in a plurality of sections of the railway network, wherein the plurality of trains are configured to operate according to the adjusted operating plan of any of claims 1 - 12.
